# EUROPEAN PATENT SPECIFICATION

(11) **EP 2 143 604 B1**
(45) Date of publication and mention of the grant of the patent: **26.10.2011**
(21) Application number: 07721273.6
(22) Date of filing: 25.05.2007
(51) Int. Cl.: B67D 7/78

(54) **A MOVABLE FUEL-FILLING STATION WITH A DEVICE FOR RECOVERING FUEL-GAS AIRTIGHTLY**
MOBILE TANKSTATION MIT EINER VORRICHTUNG ZUR LUFTDICHTEN RÜCKGEWINNUNG VON KRAFTSTOFFDÄMPFEN
STATION DE REMPLISSAGE DE CARBURANT MOBILE AVEC UN DISPOSITIF POUR RÉCUPÉRER DU CARBURANT-GAZ DE FAÇON ÉTANCHE À L'AIR

(30) Priority: 13.04.2007 CN 200710090119
(43) Date of publication of application: 13.01.2010
(73) Proprietor: SHANGHAI HUAPENG EXPLOSION- PROOF SCIENCE AND TECHNOLOGY CO., LTD., Shanghai 200030 (CN)
(72) Inventor: HUANG, Xiaodong, Beijing 100-009 (CN)
(74) Representative: Bauer, Clemens
(86) International application number: PCT/CN2007/001700
(87) International publication number: WO 2008/124973

(56) References cited:
- EP-A1- 0 507 690
- WO-A1-2006/066515
- CN-A- 1 651 289
- CN-C- 1 179 861
- CN-Y- 2 299 856
- CN-Y- 2 439 983
- CN-Y- 2 492 435
- DE-A1- 10 139 353
- US-A- 5 865 346
- US-A- 6 152 197
- US-B1- 6 216 790

## Description

### Field of the invention

The present invention relates to a fuel-filling device and especially relates to a safe, environment friendly and energy-saving fuel-filling device which is skid-mounted above the ground for dispensing gasoline or diesel to automobiles.

### Description of the prior art

To date, in domestic gas-filling stations, the fuel tanks are invariably buried underground for long terms. Being exposed to underground erosion, infiltration or leakage of oil and/or gases frequently occurs on tank walls, which thus brings about severe contamination and damage to the soil in the surrounding of gas-filling station, especially irretrievable destruction to the underground water resources. Meanwhile, a considerable percentage of these underground gas-filling stations are established in cities, and some of them are even distributed in downtown areas. With the urbanization progress speeding up, the newly-built high buildings, plazas as well as residential complexes have occupied the surrounding area closer and closer to gas-filling stations, so that the safe distances of the gas-filling stations do not comply with the relevant engineering and construction requirements for gas-filling station. As a result, some gas-filling stations are confronted with the troubles of closedown and relocation. On the other hand, more and more new gas-filling stations have to be built to meet the requirements of urban development; therefore there emerged a series of difficult dilemma, such as relocation, new land acquisition worsening the lack of land in cities. Apparently, how to reduce the area occupied by gas-filling station has become a widely concerned social and technical problem.

In addition, few gas tanks in the present gas-filling stations are equipped with fuel gas recovery devices. Even if some gas-filling stations have adopted measures to recover fuel gas, most of them have failed to produce ideal effect. In the process when fuels are transfused from tank truck to fuel-storage tanks in the gas station, a great amount of fuel gas are volatilized and disperse into the atmosphere resulting in severe air pollution, which is very harmful to people's health.

According to a searching result, a skid-mounted gas-filling facility is available on the market. Although the fuel-storage tank in such skid-mounted gas-filling facility is set up above ground, which is an improvement over the underground tank, the fuel dispenser and the fuel-storage tank are located in separate places and a certain distance is kept between them in addition to the independent operation space or control room etc configured therein., therefore such gas-filling facility still occupies a large area, involves considerable difficulty in construction and high expenses. Therefore, there still exist rooms for improving such a gasoline filling station.

EP-A-0507690 discloses the preamble of claim 1.

### Description of the invention

The first objective of the present invention is to provide a safe, environment-friendly and energy-saving fuel-filling device aiming at overcoming the deficiency of prior art. The double-wall storage tank and fuel dispenser of this device form an integral part being fixed on a skid body; said fuel dispenser is fixed onto the hood body in split installation so as to achieve compact construction to reduce occupied land area. The storage tank cavity and the interlayer between the two walls are filled with explosion-resistant separating material so as to guarantee the intrinsic safety of the storage tank. The hood body may adopt diversified shapes and patterns according to the requirement of peripheral environment, thus enhancing the visual safety effect. This gas-filling device may be conveniently hoisted or relocated as an integral body, and its construction takes much shorter time and lower expense, and its operation and maintenance is easy and convenient. In addition, the device is designed in standardized and modularized manner and is applicable to various gasoline supplying environments.

The second objective of the present invention is to provide a safe, environment-friendly and energy-saving fuel-filling device, which comprises a fuel gas recovery facility in said fuel-filling device on the basis of the realization of explosion resistance and other safety purpose, whereby fuel gases are recovered in an enclosed condition when transfusing fuel into the storage tank so as to effectively avoid the volatilization of fuel gas from the storage tank, and hence reduce the pollution and destruction to the atmosphere.and conserve the energy in this way, and thus decreasing energy consumption realizing the effects of environmental protection and energy conservation.

The objectives of the present invention are achieved through the following technical solutions:

Said safe, environment-friendly and energy-saving fuel-filling device at least comprises a fuel-storage tank, a fuel dispenser, a skid body, a hood body and a counter-impact foundation ,wherein an outlet fuel piping of said storage tank is connected with said fuel dispenser, and said storage tank and fuel dispenser are mounted on the skid body, which is bolted onto the ground so as to compose a mobile fuel-filling station. The fuel-storage tank is a double-walled tank, and the inner cavity of it and the interlayer formed between the two walls are filled with explosion-resistant separating material Said skid body is encased in said hood body above it.

Said fuel dispenser includes a digital electronic display, a fuel pump case body and a fuel injector, and it is in split installation, whereby the digital electronic display and the fuel injector are set up on the outer side of the hood body wall, and whereby the fuel pump case body is set up in the space inside of the hood body and outside of the storage tank and is fixed on the skid body; a bracket is provided on the outer wall of the hood body to support the injector, and it is mounted under the digital electronic display. An outlet fuel pipe of the storage tank is connected onto the fuel pump case body, while a fuel outlet hose of the fuel pump case body is connected onto the injector through the wall hole of said hood body. A fuel gas recovery device is set up in said storage tank comprising a breather valve provided on the storage tank, a pipeline connecting via the breather valve to said storage tank and a triple valve on the pipeline, wherein at the other end of the triple valve there provided a fuel-gas recovery hose, and the nozzle of the gas recovery hose is joined to the gas recovery hose of the tank truck while the tank truck is transfusing fuel into the storage tank.

In general situations, the skid body is a rectangular framework constructed of channeled steel reinforced by strengthening bars crossing the framework in vertical or horizontal directions within the framework. The hood body consists of four walls on its front, back, left and right sides, each of which is a multi-cellular framework made of square steels welded together, wherein an aluminum-plastic panel is fixed on the upper part of the framework, and a shutter is set up on the lower part of the framework. The digital electronic display is provided with an operational keyboard, a display screen for a liquid level meter and an electronic display screen showing the volume values in liters, the bill amount and the unit price. Depending on specific requirements, one or more injectors may be provided to match the fuel pump, so does the bracket matching the quantity of the injectors correspondingly. The inlet fuel pipe of the fuel pump case body is connected with the fuel-storage tank, and for the purpose of safety, an emergency shut-off valve is provided on the front end of the fuel inlet pipe. At the same time, a fuel gas detector provided in the fuel pump case body may give alarming upon leakage of fuel gas occurs. To provide convenience for the operating staffs, a sun cover is provided extending outwardly from the top of hood body corresponding to the position where the digital electronic display is located. Furthermore, a table for operating staffs is provided extending from the skid body corresponding to the position of the sun cover. In addition, separating boards are setup in the inner cavity of the fuel-storage tank, which is divided into more than one enclosed cavities that are used to store different kinds of oil products in the same storage tank.

In conclusion, the beneficial effects of the present invention include the following aspects:
1. In the safe, environment-friendly and energy-saving fuel-filling device provided by the present invention, the fuel dispenser in split installation is fixed on the skid body and the inner cavity of the storage tank and the interlayer between the two walls are filled with explosion-resistant separating material, which may effectively prevent the explosion accidents caused by flame, static electricity, welding, gunshot, collision and erroneous operation, and thus the safety of the fuel-storage tank is guaranteed while greatly reducing the floor area occupied by the whole facility.
2. The hood body on the skid body may be designed in diversified styles according to the requirements of peripheral environment of specific place and may adopt various shapes and patterns, so as to be esthetically harmonized with the environment and improve the visual safety effect; The structure and dimension of the fuel-storage tank as well as the specification for the fuel dispenser may be designed and manufactured according to user's requirements;
3. This device is extensively applicable to various fixed and temporary fuel-filling locations in urban centers, residential communities, large scale parking lots, speedways, towns and rural districts. This fuel-filling device may be hoisted and relocated as an integral part, and therefore makes a highly mobile device; said fuel-filling device has standardized and modularized design, and therefore requires short construction time, low expenses and easy operation and maintenance, and it is applicable for various fuel supplying environment.
4. On the basis of the solution to the intrinsic safety and explosion resistance of the fuel storage tank, said fuel-filling device of the present invention is equipped with a fuel gas recovery device so as to recover the fuel gas in enclosed condition during the process of transfusing fuel to the storage tank from a tank truck, so as to effectively avoid the volatilization of the fuel gas from the storage tank reducing the pollution and damage to the atmosphere and preventing the waste of energy source.

Further detailed description of the technical solution of the present invention will be given in combination with attached drawings and specific embodiments.

### Brief Description of the Drawings

Figure 1 is the schematic diagram of the fuel-filling device provided by of the present invention;
Figure 2 is the top plan view of Figure 1 of the present invention;
Figure 3 is the side view of Figure 1 of the present invention;
Figure 4 is the layout schematic diagram of fuel inlet and outlet piping.

The major reference signs in the Figures are described as follows:
1 fuel-storage tank 10 supporting stand
11 outlet fuel pipe 111 delivery valve 112 ball valve
113 emergency shut-off valve
12 inlet fuel pipe 121 fuel inlet valve 122 filter 123 triple valve
124 flow meter 125 fuel pump 126 check valve
14 fuel leak detection tube 141 fuel leak detection valve
2 fuel dispenser 21 electronic display 22 fuel pump case body
23 fuel injector 24 bracket for fuel injector 25 fuel outlet hose
26 electric distributor 27 display screen 28 operational keyboard
29 display 3 skid body 31 operation table
4 counter impact foundation
5 hood body 51 framework 52 aluminum-plastic panel 53 shutter
54 sun cover 55 fuel gas leak alarm
6 fuel gas recovery device 61 recovery hose 62 breather valve
63 triple valve 64 pipeline of breather valve

### Detailed Description of the Preferred Embodiments

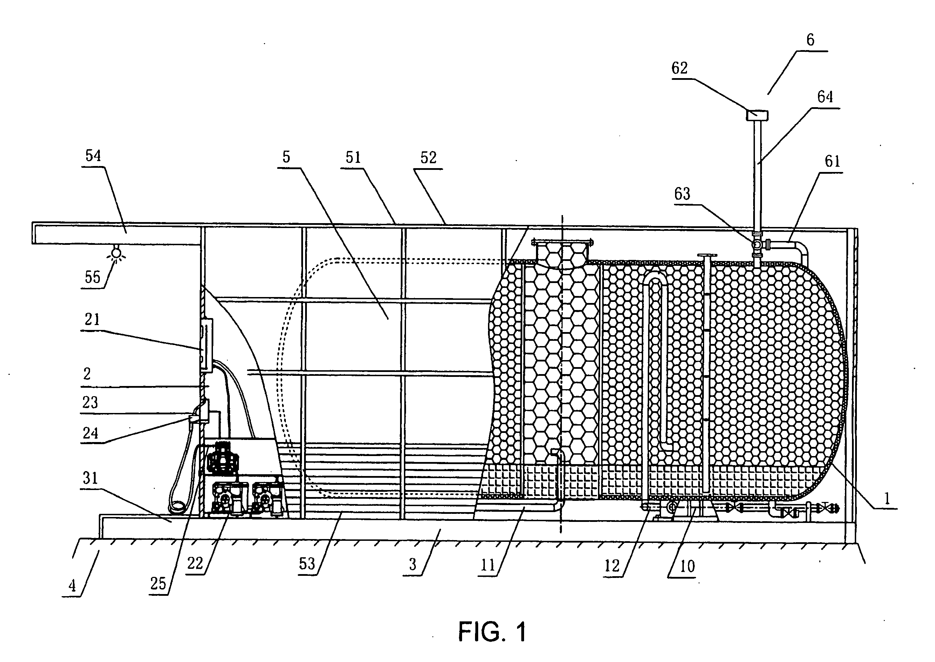

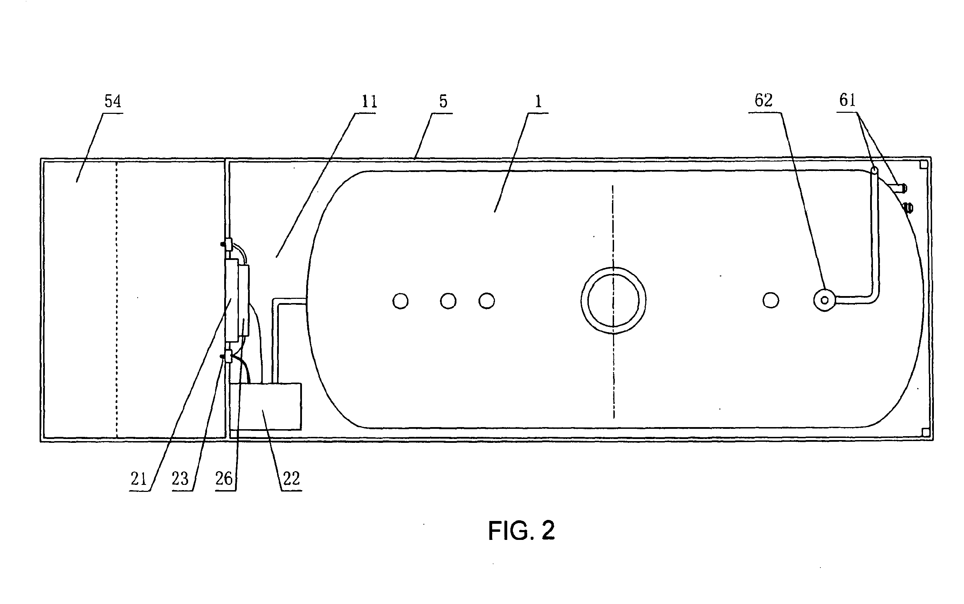

Figure 1 is the schematic diagram of the integral structure of said safe, environment-friendly and energy-saving fuel-filling device of the present invention, and Figure 2 is the top plan view of Figure 1 of the present invention. As can be known from Figures 1 and 2, the present invention provides a safe, environment-friendly and energy-saving fuel-filling device which at least comprises a fuel-storage tank 1 the fuel outlet pipe 11 of the fuel-storage tank 1 is connected with the fuel-dispenser 2. A supporting stand 10 is set up at the bottom of the fuel-storage tank 1; The fuel-storage tank 1 is a double walled tank; Furthermore, the separating explosion-resistant materials are respectively filled in the inner cavity of fuel-storage tank 1 and in the interlayer formed between the two-layer tank walls. A skid body 3 is set up under the fuel-storage tank 1 and is fixed on the counter impact foundation with bolts so as to form a highly mobile, safe, environment-friendly and energy-saving fuel-filling device ; A hood body 5 is set up on the skid body 3. In general cases, the skid 3 is a rectangular framework made of channeled steels welded together reinforced by strengthening bars extending across the frame in vertical and horizontal directions within the framework. At the same time, patterned steel sheets are paved on the framework and water discharge grooves are provided; the framework is fixed on the counter impact foundation 4 through underground bolts. To guarantee the safety of the fuel-filling device, the foundation 4 is provided with static electricity and lightning protection network. Whenever it is required to relocate this device, since the fuel-storage tank 1, fuel dispenser 2 and pipelines thereof etc. are installed on the skid body 3, hoisting of this fuel-filling device in an integral body may be performed so long as the bolts connected with the foundation are removed. Therefore, the relocation of the device is very convenient. In this way, a gasoline filling station established by using said fuel-filling device provided by the present invention has the advantages of short construction period, quick and convenient operation and high efficiency, thus being applicable to various fuel supplying environments. In addition, since the fuel-filling device is set up on the ground, it may greatly save the floor area and construction cost compared with the underground fuel-filling station. For example, a fuel-filling device with a fuel-storage tank of 25 M³ according to the present invention only occupies a land area of 40 M³.. The floor area covered by this fuel-filling device is mainly based on the floor area of skid body 3.

The primary function of the hood body 5 fixed on the skid body 3 is to protect the fuel-storage tank 1 from bump and damage caused by unexpected accidents. In addition, for the fuel-filling stations established in downtown areas, it is also feasible to post various appealing advertisements on the wall of the hood body 5 so as to eliminate the spontaneous fear evoked at the sight of such nominally inflammable and explosive dangerous chemical products according to common sense. Under general conditions, the hood body 5 is constructed of four walls on the front, back, left and right sides, each of which is a multi-cellular framework 51 made of square steels welded together. An aluminum-plastic panel 52 is fixed on the upper part of the framework. Different color of aluminum-plastic panel 52 can be chosen according to the requirements of specific location, and the shape of the panel may be designed in diversified styles so as to be harmonized with the environment. For example, the hood body 5 may be designed as cuboids, cylinder or other irregular shapes. A shutter 53 may be set up on the lower part of the framework 51 so as to improve the air circulation in the hood body and hence effectively avoid the aggregation of fuel gas and eliminate hidden hazard in the event of fuel gas leakage. A fuel gas leakage detection device may be setup to provide automatic alarming so that effective measures can be adopted in time to guarantee safety. The lifting rings not shown in the Figure are respectively set up on the corresponding positions of the front and back sides of the framework for the purpose of integral hoisting.

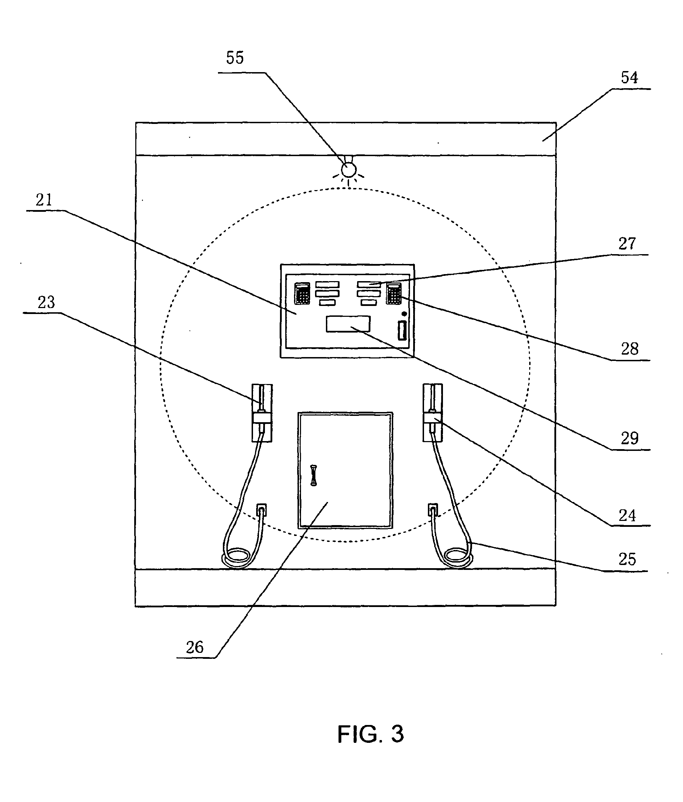

Figure 3 is the side view of Figure 1 of present invention. As can be known from Figure 3 in combination with Figures 1 and 2, the fuel dispenser 2 is a split type fuel dispenser which comprises a digital electronic display 21, a fuel pump case body 22 and a fuel injector 23. The digital electronic display 21 and the fuel injector 23 are set up on the outside wall of the hood body 5, and the fuel pump case body 22 is set up on the skid body located in the space inside of the hood body 5 and outside of the fuel-storage tank 1. To guarantee safety, a fuel gas leak detection device ( mainly refers to as light fuel gas alarm in the present invention ) is set up in the fuel pump case body 22. Upon any fuel gas is detected, the detection device will provide automatic warning for timely prevention measures and to guarantee safety. The fuel outlet hose 25 connected on the fuel pump case body 22 is connected with the fuel injector 23 through the hood wall hole on the hood body 5; The supporting stand 24used to support the fuel injector is fixed on the outer wall of the hood body 5 and located under the digital electronic display 21. The quantity of the fuel injector 23 may be one or more corresponds to the designed fuel pump. In this embodiment, there are two fuel injector 23, that is to say, this embodiment particularly provides a two-fuel-pump and two-injector fuel-filling device. A distribution box 26 of the fuel-filling device is set up between the two brackets 24 for two fuel injectors. A gear fuel pump of said fuel dispenser, a filter and a flow meter are set up in the fuel pump case body 22. The gear fuel pump may be a G.P03 gear pump in compliance with the international measurement standard OIMLR117 / 118, which adopts fixed-shaft inner gearing circular tooth gear drive and forced gas-oil separation, The gear fuel pump is characterized in stable operation, low noise, strong gas-oil separation and fuel absorption ability as well as long life. The flow meter may be a LU05 flow meter complying with international measurement standard OIMLR117 / 118, which is characterized in crank connecting rod, fixed stroke control, soft piston and built-in spring sealing etc. Said flow meter product may achieve zero accident for 5 million liter operation and operating life as high as 10 million liters, and it can perform normal operation under the low temperature of minus 45 °C.

According to the requirements, the digital electronic display 21 is provided with an operational keyboard 28 and a digital electronic display screen 27 showing the volume values in liters, the bill amount and the unit price. A control circuit board and electronic components are set up in the digital electronic display 21, on which the display 29 for liquid level meter is also provided to monitor the parameters of liquid level of the fuel in the fuel-storage tank 1 at any moment.

As shown in Figures 1, 2 and 3, a sun cover 54 extends outward on the top of the hood body 5, which is set up on the position corresponding to the position where the digital electronic display is located. Furthermore, the operation table 31 for the operating staffs extends on the skid body 3 on the corresponding lower part of the sun cover 54. The sun cover 54 is a rectangle flat roof made of square steels welded together with sun panels being paved on the top, and a fuel gas leak alarm 55 is installed in the middle of the sun cover 54.

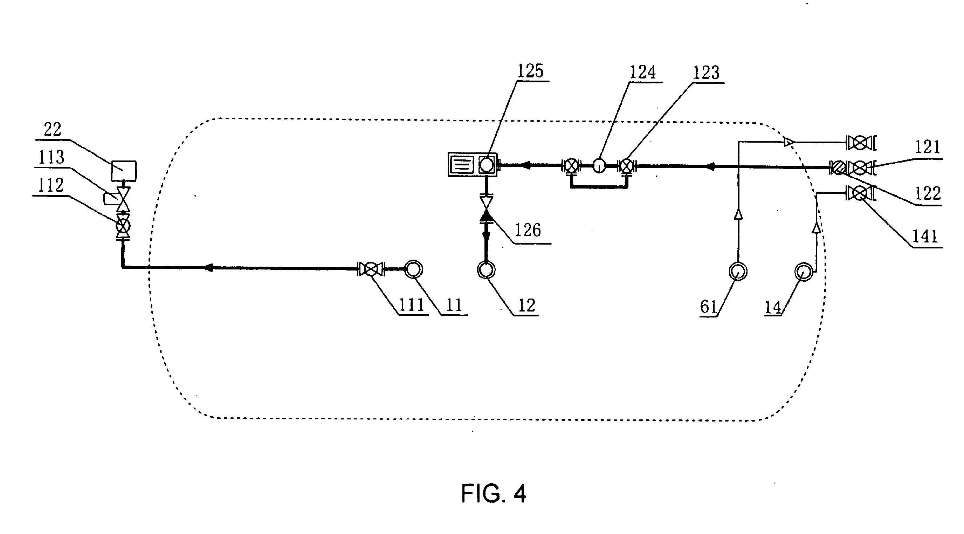

Figure 4 is the layout schematic diagram of the fuel inlet and outlet piping of the fuel-filling device of present invention. As known from Figure 4, during the process of fueling the -storage tank 1, the fuel enters from the inlet valve 121 and pass through the filter 122 so as to be purified; then the fuel travel through the triple valve 123 and the flow meter 124 by way of the fuel pump 125 and the check valve 126 and enters the fuel-storage tank 1 from the fuel inlet pipe 12. To guarantee the safety, a detection device to prevent oil/gas leakage is set up on the position of the fuel pump 125. Once fuel/gas leakage is detected in fuel pipeline, it will give an automatic alarming for timely measures to be adopted to ensure safety. During the process of fuel dispensing from the storage tank, the fuel is output from the outlet pipe 11, transported in the pipeline by way of delivery valve 111, and then travels through the ball valve 112 and emergency shut-off valve 113 and enters the fuel pump case body 22. An automatic protection valve is set up on the fuel inlet pipe of fuel pump case body 22 which cut off fuel delivery in the event of high temperature. Under the actuation of the fuel pump case body 22, fuel is output from the fuel injector 23 by way of the outlet fuel hose 25.

As shown in Figure 1, in order to prevent the direct discharge of fuel gas to atmosphere in the process of fueling -storage tank 1, which may cause pollution to the air, an fuel gas recovery device 6 is set up on the -storage tank 1. The fuel gas recovery device 6 comprises a breather valve which is connected with the storage tank 1 through the breather valve pipeline 64. A triple valve 63 is mounted on the breather valve pipeline 64, on end of which is connected to fuel gas recovery hose 61. The nozzle of the fuel gas recovery hose 61 is connected with the joint of the fuel gas recovery hose of the tank car. During the process of fueling the storage tank 1, the triple valve 63 is manual controlled, the fuel gas recovery hose 61 is opened, the breather valve 62 is closed, and the fuel and gas stored in the storage tank 1 are recovered to the storage tank of the tank truck through the fuel gas recovery hose 61( expiration ). During the process of dispensing fuel to the automobiles through the fuel dispenser, the fuel gas recovery hose 61 is closed, the breather valve 62 is opened, and -storage tank 1 "inspires" through the breather valve 62. Therefore, the fuel gas recovery in enclosed condition is achieved through such a fuel gas recovery device so that the fuel gas may not be volatilized into the air generating no contamination to atmosphere, and thus the purpose of safety and environmental protection is achieved. At the same time, in order to further improve safety, an fuel gas leak detector tube 14 and an fuel gas leak detection valve 141 are connected into the interlayer of fuel-storage tank 1, thus once gas fuel leak from the tank wall of the storage tank 1 is detected, the repairing operation will be carried out at any time.

In the skid mounted fuel-filling station of prior art, the fuel dispenser and the fuel-storage tank are separately set up, and a safe distance is kept between them As shown in Figure 3, thus the floor area of a gasoline filling station based on such a device is increased.. Since the safe, environmental protection and energy-saving fuel-filling device provided by the present invention adopts a fuel storage tank filled with explosion-resistant separating material and the novel design of split type fuel dispenser, the parts exposed on the outside of the hood body 5 merely include the digital electronic display 21, the filling gun 23, the filling gun bracket 24, as well as the opening door of the electric distributor 26, the outlet fuel hose 25 connected on the fuel pump case body 22 being connected to the fuel dispenser 23 through the hood wall hole opened on the hood body 5. For these reasons, the concept of "Zero distance" between the fuel pump and the fuel-storage tank may be realized, and then so called concept of "fuel-filling island" may be outdated.

The fuel-storage tank 1 adopted by the present invention is a double walled tank, with explosion-resistant separating materials being respectively filled in the storage tank and the interlayer between the tank walls. The s explosion-resistant separating material is made of special alloy, which is made into laminated reticular forms or spheroid form through a mesh machine. The material filling in the storage tank may effectively prevent the explosion accidents initiated by flame, static electricity, welding, gunshot and collision, thus realizes the intrinsic safety. For the more detailed information regarding the separating explosion-proof materials, it is advisable to refer to the family application for patent titled "Separating explosion-proof material" ( Application number: CN20050067976.) or the application for patent titled "Separating explosion-proof material unit body" (Application number: CN200510066233.2). Meanwhile, a silo, a decontamination tunnel are installed inside the storage tank 1, and a contaminants discharging pipelines are provided at the bottom of the tank, so that the operating staffs may conveniently maintain the -storage tank and conduct cleaning d explosion-resistant separating material in the tank. For the detailed relevant content of its embodiment as well as its function and effects, it is advisable to refer to patent application titled "Separating and explosion protection underground oil storage tank capable of cleaning and maintenance " (patent number: ZL01144635.8 ), A liquid level meter with high/low level alarm functions is set up in the storage tank 1, and an emergency pressure relief device and an overflow-proof device etc. are set up on the top of the storage tank. A detection device used to prevent fuel gas leakage is set up in the interlayer of the tank walls. This detection device is an inflammable gas detector ( Mode QJ - T ) produced by Tianjin Dongli Warning Device Factory. Upon detecting the leak of oil products, the detector will send an automatic alarm for measures to avoid contamination to the underground water resources.

The working principle of the separating explosion resistance is as follows: according to the heat transfer theory and the basic conditions for the formation of combustion and/or explosion, it utilizes the highly porous space of the reticular materials filling in the fuel-storage tank to prevent the rapid spread of flame and the instant release of energy; and at the same time, it utilizes the surface effect of metallic materials to destroy the conditions for combustion medias to aggregate energy and form explosion, so as to prevent combustion and explosion and achieve intrinsic safety. The explosion-resistant separating material has the function to suppress the volatilization of fuel gas. After the underground storage tanks of gasoline filling station have been up-graded with the separating explosion resistance technology, the losses of fuel products as well as the pollution of fuel gas to atmosphere may be effectively reduced. For example, for a middle-scale gasoline filling station with annual turnover of 5000 tons, after implementing the separating explosion resistance technology, the losses of fuel products may be reduced by about 13 tons and over 70,000 Yuan may be saved annually.

Therefore, the requirement of "Zero distance" may only be actualized by changing the structural layout between the fuel dispenser and the fuel-storage tank on the basis of the intrinsic safety realized after implementing the separating explosion resistance technology on the storage tank.

Where a fuel-storage tank with large volume is required to store multiple kinds of oil products, it is also feasible to set up one or more of separating boards in the tank body of -storage tank so as to divide the volume of tank body into two or more relatively independent cabins. The arrangement of the separating board enhances the intensity of the tank body of the fuel-storage tank on the one hand, and on the other hand the arrangement divides the fuel tank into independent cabins, so that the fuel tank can contain two or more gasoline products with different labels such as 90 # , 93 # and 97 # etc, thus meeting the requirement that multiple kinds of oil products may be stored in a same fuel tank. It is necessary to note that, it is also required to set up a decontamination channel and a corresponding contaminant discharging valve in each cabin so as to conduct decontamination and waste discharge in time.

In the end, it must be mentioned as follows: above embodiments are merely used to describe rather than limit the present invention. Although detailed description of present invention is provided with reference to the preferred embodiments, the common technical personnel of this field should understand that any modification or substitution to the present invention within the spirit and scope of the present invention should be covered by the scope of claims of present invention.

## Claims

1. A safe, environment-friendly and energy-saving fuel-filling device at least comprising a fuel-storage tank( 1 ), a fuel dispenser( 2 ), a skid body( 3 ), a hood body ( 5 ) and a counter-impact foundation ( 4 ) , wherein said storage tank is connected with the fuel dispenser via a fuel outlet piping ( 11 ), said skid body is encased in said hood body above it, and said fuel-storage tank and fuel dispenser are mounted on the skid body, which is bolted onto the ground such as to compose a mobile fuel-filling station; further said -storage tank is a double-walled tank, and the inner cavity of the storage tank and the interlayer formed between the double walls are filled with explosion-resistant separating materials; and said fuel-filling device is **characterized in** the following technical features:
Said fuel dispenser ( 2 ) is in split installation, and it includes a digital electronic display ( 21 ) , a fuel pump case body ( 22 ) and a fuel injector ( 23 ) ; the digital electronic display and the fuel injector are set up on the outer side of hood body ( 5 ) wall and the fuel pump case body is set up in the space inside of the hood body and outside of the storage tank, and it is fixed on the skid body ( 3 ) ; a bracket( 24 ) is provided under the digital electronic display on the outer wall of the hood body to support the injector; an outlet fuel pipe of the storage tank is connected onto the fuel pump case body, while an outlet fuel hose on the fuel pump case body is connected onto the injector through the wall hole of said hood body and
A fuel gas recovery device ( 6 ) is set up on said storage tank comprising a breather valve ( 62 ) provided on the storage tank, a pipeline connecting via the breather valve to said storage tank and a triple valve ( 63 ) on the pipeline, wherein at the other end of the triple valve there is a fuel gas recovery hose( 61 ), the nozzle of which is joined to the gas recovery hose of the tank truck while the tank truck is transfusing fuel into the fuel-storage tank.

2. A safe, environment-friendly and energy-saving fuel-filling device according to claim 1, **characterized in that** said skid body( 3 ) is a rectangular framework made of channeled steel and is reinforced by strengthening bars crossing the framework in vertical and horizontal directions.

3. A safe, environment-friendly and energy-saving fuel-filling device according to claim 1, **characterized in that** said hood body ( 5 ) consists of four wall bodies on its front, back, left and right sides, each of which is a multi-cellular framework ( 51 ) made of square steels welded together; wherein an aluminum-plastic panel ( 52 ) being fixed on the upper part of the framework, and a shutter ( 53 ) being set up on the lower part of the framework.

4. A safe, environment-friendly and energy-saving fuel-filling device according to claim 1, **characterized in that** said digital electronic display( 21 ) is provided with an operational keyboard ( 28 ) , a display screen ( 27 ) for the liquid level meter and a digital display screen ( 29 ) showing the volume values in liter, bill amount and unit price.

5. The safe, environment-friendly and energy-saving fuel-filling device of Claim 1, **characterized in that** there are one or more fuel injectors( 23 ) and brackets( 24 ) to support the fuel injectors, the quantity of the bracket corresponds to that of the injector.

6. The safe, environment-friendly and energy-saving fuel-filling device of Claim 1, **characterized in that** an inlet fuel pipe ( 12 ) and the fuel-storage tank ( 1 ) are connected in said fuel pump case body ( 22 ) , and an emergency shut-off valve ( 13 ) is set up on the front end of the environment-friendly inlet fuel pipe.

7. The safe, environment-friendly and energy-saving fuel-filling device of Claim 1 or 6, **characterized in that** a fuel gas leak detection device is set up in said fuel pump case body ( 22 ) to prevent fuel gas leakage.

8. The safe, environment friendly and energy-saving fuel-filling device according to Claim 1, **characterized in that** a sun cover ( 54 ) extends outward on the top of said hood body ( 5 ) and that it is set up on a position corresponding to the position where the digital electronic display is located; furthermore, an operation table ( 31 ) for operating staffs extends on the skid body on the corresponding lower part of the sun cover.

9. The safe, environment friendly and energy-saving fuel-filling device according to Claim 1, **characterized in that** separating boards are setup in the inner cavity of the fuel-storage tank( 1 ) so that the space of the tank body is divided into more than one enclosed cavities that are used to store different kinds of oil products in the same fuel-storage tank.

## Patentansprüche

1. Eine sichere, umweltfreundliche und energiesparende Tankvorrichtung wenigstens umfassend einen Kraftstofflagertank (1), eine Zapfsäule (2), einen Rahmenkörper (3), einen Abdeckkörper (5) und eine Anti-Schlag-Basis (4), wobei der Lagertank mit der Zapfsäule über eine Kraftstoffauslassverrohrung (11) verbunden ist, der Rahmenkörper von dem darüberliegenden Abdeckkörper umhüllt ist und der Kraftstofflagertank und die Zapfsäule an dem Rahmenkörper, welcher am Erboden derart verschraubt ist, dass eine mobile Tankstation entsteht, angeordnet sind; weiterhin ist der Lagertank ein doppelwandiger Tank und der innere Hohlraum des Lagertanks und die zwischen den Doppelwänden gebildete Zwischenschicht sind mit explosionsfesten Trennmaterialien gefüllt; und die Tankvorrichtung ist durch die folgenden technischen Merkmale **gekennzeichnet**:
die Zapfsäule (2) ist getrennt aufgestellt und beinhaltet eine digitale elektronische Anzeige (21), einen Kraftstoffpumpen-Gehäusekörper (22) und eine Kraftstoffeinspritzdüse (23); die digitale elektronische Anzeige und die Kraftstoffeinspritzdüse werden an der Außenseite der Wand des Abdeckkörpers (5) angeordnet und der Kraftstoffpumpen-Gehäusekörper ist in dem Raum innerhalb des Abdeckkörpers und außerhalb des Lagertanks eingerichtet und
an dem Rahmenkörper (3) befestigt; eine Klammer (24) ist unter der digitalen elektronischen Anzeige an der Außenwand des Abdeckkörpers zur Abstützung der Einspritzdüse vorgesehen; ein Kraftstoffauslassrohr des Lagertanks ist am Kraftstoffpumpen-Gehäusekörper verbunden, während ein Kraftstoffauslassschlauch am Kraftstoffpumpen-Gehäusekörper an der Einspritzdüse durch das Wandloch des Abdeckkörpers verbunden ist, und
eine Kraftstoffdämpfe-Rückgewinnungsvorrichtung (6) ist am Lagertank eingerichtet, umfassend ein Entlüftungsventil (62), welches am Lagertank vorgesehen ist, eine Leitung, welche über das Entlüftungsventil eine Verbindung zu dem Lagertank herstellt, und ein Steuerventil (63) an der Leitung, wobei sich am anderen Ende des Steuerventils ein Kraftstoffdämpfe-Rückgewinnungsschlauch (61) befindet, dessen Düse mit dem Kraftstoffdämpfe-Rückgewinnungsschlauch des Tankwagens zusammengefügt ist, während der Tankwagen Kraftstoff in den Kraftstofflagertank überträgt.

2. Eine sichere, umweltfreundliche und energiesparende Tankvorrichtung nach Anspruch 1, **dadurch gekennzeichnet, dass** der Rahmenkörper (3) ein rechteckiges Gerüst ist, welches aus Stahlkanälen besteht und durch Verstärkungsstreben, welche das Gerüst vertikal und horizontal kreuzen, verstärkt ist.

3. Eine sichere, umweltfreundliche und energiesparende Tankvorrichtung nach Anspruch 1, **dadurch gekennzeichnet, dass** der Abdeckkörper (5) vorne, hinten, links und rechts aus vier Wandkörpern besteht, von denen jeder ein mehrzelliges Gerüst (51) aus zusammengeschweißtem quadratischem Stahl ist; wobei ein Aluminium-Kunststoff-Paneel (52) am oberen Teil des Gerüsts befestigt wird und eine Blende (53) am unteren Teil des Gerüsts eingerichtet wird.

4. Eine sichere, umweltfreundliche und energiesparende Tankvorrichtung nach Anspruch 1, **dadurch gekennzeichnet, dass** die digitale elektronische Anzeige (21) mit einer Betriebs-Tastatur (28), einem Anzeigeschirm (27) für den Flüssigkeitspegelmesser und einem digitalen Anzeigeschirm (29), welcher die Volumenwerte in Liter, den Rechnungsbetrag und den Preis je Einheit anzeigt, versehen ist.

5. Die sichere, umweltfreundliche und energiesparende Tankvorrichtung nach Anspruch 1, **dadurch gekennzeichnet, dass** es eine oder mehrere Kraftstoffeinspritzdüsen (23) und Klammern (24) zur Abstützung der Kraftstoffeinspritzdüsen gibt, wobei die Anzahl der Klammern der Anzahl der Düsen entspricht.

6. Die sichere, umweltfreundliche und energiesparende Tankvorrichtung nach Anspruch 1, **dadurch gekennzeichnet, dass** ein Kraftstoffeinlassrohr (12) und der Kraftstofflagertank (1) in dem Kraftstoffpumpen-Gehäusekörper (22) verbunden sind und ein Notabschaltungsventil (13) am vorderen Ende des umweltfreundlichen Kraftstoffeinlassrohrs eingerichtet ist.

7. Die sichere, umweltfreundliche und energiesparende Tankvorrichtung nach Anspruch 1 oder 6, **dadurch gekennzeichnet, dass** eine Kraftstoffdämpfe-Leckerkennungsvorrichtung in dem Kraftstoffpumpen-Gehäusekörper (22) eingerichtet ist, um das Ausströmen von Kraftstoffdämpfen zu verhindern.

8. Die sichere, umweltfreundliche und energiesparende Tankvorrichtung nach Anspruch 1, **dadurch gekennzeichnet, dass** ein Sonnenschutz (54) sich oben an dem Abdeckkörper (5) nach außen erstreckt und dass er in einer Position entsprechend der Position, in der die digitale elektronische Anzeige platziert ist, eingerichtet ist; außerdem erstreckt sich ein Bedientisch (31 ) für Bedienpersonal am Rahmenkörper am entsprechenden unteren Teil des Sonnenschutzes.

9. Die sichere, umweltfreundliche und energiesparende Tankvorrichtung nach Anspruch 1, **dadurch gekennzeichnet, dass** Trenntafeln im inneren Hohlraum des Kraftstofflagertanks (1) eingerichtet sind, so dass der Raum des Tankkörpers in mehr als einen eingeschlossenen Hohlraum, welche für die Lagerung unterschiedlicher Arten von Ölprodukten in demselben Kraftstofflagertank verwendet werden, geteilt wird.

## Revendications

1. Dispositif de remplissage de carburant de sécurité, respectant l'environnement et économisant l'énergie, comprenant au moins un réservoir de stockage de carburant (1), un distributeur de carburant (2), un corps à glissière (3), un corps de capot (5) et une fondation résistant aux impacts (4), dans lequel ledit réservoir de stockage est connecté au distributeur de carburant via un tube de sortie de carburant (11), ledit corps à glissière est enchâssé dans ledit corps de capot au-dessus de celui-ci, et ledit réservoir de stockage de carburant et ledit distributeur de carburant sont montés dans le corps à glissière, lequel est boulonné sur le sol de manière à composer une station de remplissage de carburant mobile ; ledit réservoir de stockage de carburant étant en outre un réservoir à double paroi et la cavité intérieure du réservoir de stockage et la couche intermédiaire formée par les doubles parois sont remplies de matériau de séparation résistant aux explosions ; et ledit dispositif de remplissage de carburant est **caractérisé par** les caractéristiques techniques suivantes :
ledit distributeur de carburant (2) est prévu dans une installation scindée, et il inclut un affichage électronique numérique (21), un corps de carter de pompe à carburant (22) et un injecteur de carburant (23) ; l'affichage électronique numérique et l'injecteur de carburant sont placés sur le côté extérieur de la paroi du corps de capot (5) et le corps de carter de la pompe à carburant est placé dans l'espace à l'intérieur du corps de capot et à l'extérieur du réservoir de stockage, et il est fixé sur le corps à glissière (3) ; une platine (24) est prévue au-dessous de l'affichage électronique numérique sur la paroi extérieure du corps de capot pour supporter l'injecteur ; un tube de carburant en sortie du réservoir de stockage est connecté avec le corps du carter de pompe, alors qu'un tuyau de carburant en sortie sur le corps de carter de la pompe à carburant est connecté sur l'injecteur via un trou dans la paroi dudit corps de capot, et
un dispositif de récupération de gaz de carburant (6) est placé sur ledit réservoir de stockage et comprend une valve de mise à l'air (62) prévue sur le réservoir de stockage, un tubage qui est connecté via la valve de mise à l'air audit réservoir de stockage, et une triple valve (63) sur le tubage, dans lequel est prévu, à l'autre extrémité de la triple valve, un tuyau de récupération de gaz de carburant (61) dont la buse est réunie au tuyau de récupération de gaz du camion-citerne lorsque le camion-citerne transfère du carburant vers le réservoir de stockage de carburant.

2. Dispositif de remplissage de carburant de sécurité, respectant l'environnement et économisant l'énergie selon la revendication 1, **caractérisé en ce que** ledit corps à glissière (3) est un châssis rectangulaire réalisé en acier profilé et est renforcé par des barres de rigidification qui croisent le châssis dans les directions verticale et horizontale.

3. Dispositif de remplissage de carburant de sécurité, respectant l'environnement et économisant l'énergie selon la revendication 1, **caractérisé en ce que** ledit corps de capot (5) est constitué de quatre corps de paroi sur ses côtés avant, arrière, gauche et droit, chacun d'eux étant un châssis multicellulaire (51) constitué de profilés en acier carré soudés ensemble ; dans lequel un panneau en aluminium-plastique (51) est fixé sur la partie supérieure du châssis, et un obturateur (53) est placé sur la partie inférieure du châssis.

4. Dispositif de remplissage de carburant de sécurité, respectant l'environnement et économisant l'énergie selon la revendication 1, **caractérisé en ce que** ledit affichage électronique numérique (21) est pourvu d'un clavier fonctionnel (28), d'un écran d'affichage (27) pour le dispositif de mesure de niveau de liquide, et un écran d'affichage numérique (29) montrant les valeurs de volume en litres, le montant facturé et le prix unitaire.

5. Dispositif de remplissage de carburant de sécurité, respectant l'environnement et économisant l'énergie selon la revendication 1, **caractérisé en ce qu'**il existe un ou plusieurs injecteurs de carburant (23) et une ou plusieurs platines (24) pour supporter les injecteurs de carburant, le nombre de platines correspondant à celui des injecteurs.

6. Dispositif de remplissage de carburant de sécurité, respectant l'environnement et économisant l'énergie selon la revendication 1, **caractérisé en ce qu'**un tube d'entrée de carburant (12) et le réservoir de stockage de carburant (1) sont connectés dans ledit corps de carter de pompe à carburant (22), et une valve de coupure d'urgence (13) est placée sur l'extrémité frontale du tube d'entrée de carburant respectant l'environnement.

7. Dispositif de remplissage de carburant de sécurité, respectant l'environnement et économisant l'énergie selon la revendication 1 ou 6, **caractérisé en ce qu'**un dispositif de détection de fuites de gaz de carburant est placé dans ledit corps de carter de pompe à carburant (22) pour empêcher les fuites de gaz de carburant.

8. Dispositif de remplissage de carburant de sécurité, respectant l'environnement et économisant l'énergie selon la revendication 1, **caractérisé en ce qu'**une protection solaire (54) s'étend vers l'extérieur sur le sommet dudit corps de capot (5) et **en ce qu'**elle est placée à une position correspondant à la position à laquelle l'affichage électronique numérique est placé ; en outre, un tableau de service (31) pour le personnel de service s'étend sur le corps à glissière sur la partie inférieure correspondante de la protection solaire.

9. Dispositif de remplissage de carburant de sécurité, respectant l'environnement et économisant l'énergie selon la revendication 1, **caractérisé en ce que** des plaques de séparation sont placées dans la cavité intérieure du réservoir de stockage de carburant (1) de sorte que l'espace du corps de réservoir est divisé en plusieurs cavités fermées qui sont utilisées pour stocker différents types de produits pétroliers dans le même réservoir de stockage de carburant.
